# EUROPÄISCHE PATENTANMELDUNG

(11) **EP 4 201 850 A1**
(43) Veröffentlichungstag der Anmeldung: **28.06.2023**
(21) Anmeldenummer: 22212191.5
(22) Anmeldetag: 08.12.2022
(51) Int. Cl.: B65G 43/00, G05B 19/418, G06N 3/08, B65G 43/10, G06F 3/048

(54) **VERFAHREN ZUM ANZEIGEN EINES ABBILDES EINER FÖRDERANORDNUNG**

(30) Priorität: 23.12.2021 EP 21217526
(71) Anmelder: Interroll Holding AG, 6592 Sant' Antonino (CH)
(72) Erfinder: Ripperda, Christian, 41836 Hückelhoven (DE)
(74) Vertreter: Kohlhof, Stephan

(57) **Zusammenfassung**

Verfahren zum Anzeigen eines Abbildes (1B) einer Förderanordnung (1) und/oder Abbildern (2B) von mehreren Fördersegmenten (2) der Förderanordnung (1) graphisch auf einer Anzeigevorrichtung (16),
die räumliche Anordnung der Abbilder (2B) zueinander entspricht einer räumlichen Anordnung der durch die Abbilder (2B) dargestellten Fördersegmente (2) zueinander,

insbesondere wobei das Abbild (2B) eine graphische Darstellung der Fördersegmente in Draufsicht umfasst.

## Beschreibung

Die Erfindung betrifft ein Verfahren zum Anzeigen eines Abbildes einer Förderanordnung und/oder Abbildern von mehreren Fördersegmenten der Förderanordnung graphisch auf einer Anzeigevorrichtung (16).

Die EP 1 361 182 B1 offenbart eine Fördervorrichtung mit einer Vielzahl von Rollen zur Förderung eines Artikels und einem Motor zum Antreiben der Rollen. Die Fördervorrichtung ist in eine Vielzahl von Fördersegmenten (in der EP 1 361 182 B1 als "module 2" bezeichnet) unterteilt. Anhand einer Steuerung wird die Tätigkeit des Motors gesteuert. Pro Fördersegment isoliert wird der Rotationszustand von einer Rolle des Fördersegments ermittelt. Durch Vergleich mit einem Standardwert kann isoliert auf das Fördersegment der gegenwärtige Status eines Förderguts bestimmt werden.

Das in der EP 1 361 182 B1 beschriebene Vorgehen ermöglicht Erkennung bestimmter Situationen isoliert an einem Fördersegment auf Basis vordefinierter Standardwerten.

EP 4 002 162 A1 befasst sich mit der Analyse von Daten, die sich auf geographische Gebiete beziehen. Ein typischer Datensatz umfasst dabei ein Grundstück gff. mit einem darauf befindlichen Gebäude und dazugehörenden Attributen. Der Datensatz kann dabei unter Verwendung des Datenformats GeoJSON abgespeichert werden, da dieses Datenformat ein Datenfeld für geodätische Koordinaten vorsieht.

Es ist Aufgabe der vorliegenden Erfindung, ein Möglichkeit zur Visualisierung der Zustände von Förderanlagen bereitzustellen. Dies wird erreicht auf anhand eines Verfahrens nach Anspruch 1; Ausgestaltungen sind Gegenstand der Unteransprüche sowie der Beschreibung.

Die Erfindung wird anhand der Figuren nachfolgend näher erläutert, hierin zeigt:
- Fig. 1: ein Fördersegment für eine Förderanordnung in perspektivischer Darstellung;
- Fig. 2: eine Förderanordnung mit einer Mehrzahl an Fördersegmenten nach Figur 1 in perspektivischer Darstellung;
- Fig. 3: eine Auswahl an Fördersegmentdaten eines ersten Datensatzes eines ersten Fördersegments der Förderanordnung nach Figur 2, die während des Betriebs generiert werden;
- Fig. 4: eine Auswahl an Fördersegmentdaten eines zweiten Datensatzes eines zweiten Fördersegments der Förderanordnung nach Figur 2 entsprechend der Auswahl nach Figur 3;
- Fig. 5: eine Datensammlung mit einer Vielzahl an Datensätzen umfassend die Datensätze aus den Figuren 3 und 4 und den Datensätzen weiterer Fördersegmente;
- Fig. 6: eine Datensammlung analog Figur 5 mit einem fördergutbezogenen Datenmuster;
- Fig. 7: eine Auswahl an Fördersegmentdaten des ersten Datensatzes des ersten Fördersegments der Förderanordnung nach Figur 2, die während des Betriebs generiert werden;
- Fig. 8: eine Auswahl an Fördersegmentdaten des zweiten Datensatzes des zweiten Fördersegments der Förderanordnung nach Figur 2 entsprechend der Auswahl nach Figur 7;
- Fig. 9: eine Datensammlung mit einer Vielzahl an Datensätzen umfassend die Datensätze aus Figuren 7 und 8 und den Datensätzen weiterer Fördersegmente;
- Fig. 10: eine Förderanordnung mit angeschlossener Anzeigevorrichtung in einem ersten Anzeigezustand;
- Fig. 11: eine Förderanordnung mit angeschlossener Anzeigevorrichtung in einem zweiten Anzeigezustand;
- Fig. 12: a) die Anzeigevorrichtung aus Figur 11 mit eingefärbten Fördersegmenten mit zugehörigen Fördersegmentdaten, b) eine Auswahl von Fördersegmentdaten, die Grundlage für die Anzeige nach Figur 12a sind;
- Fig. 13: graphische Farbzuordnungen aus der Anzeige nach Figur 12 in Einzeldarstellung in unterschiedlichen Zuständen;
- Fig. 14: Werteverteilungen als Basis für eine automatische Festlegung einer Farbzuordnung.

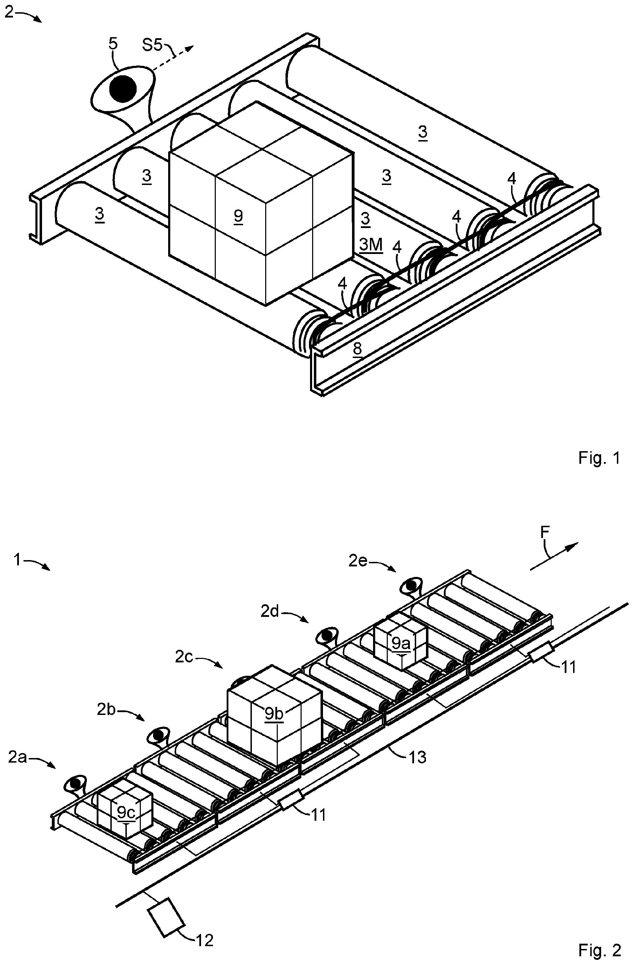

Die Figuren 1 und 2 werden nachfolgend gemeinsam beschrieben. Figur 2 zeigt eine Förderanordnung 1, die mehrere Fördersegmente 2a..2e umfasst. Solche Fördersegmente sind in Einzelheit in Figur 1 dargestellt.

Ein Fördersegment 2 umfasst mehrere Förderrollen 3, die gemeinsam angetrieben werden. Dazu ist eine der Förderrollen 3 als motorbetriebene Förderrolle 3M ausgebildet. Die motorbetriebene Förderrolle 3M wird insbesondere durch einen in der Förderrolle 3M angeordneten Drehstrommotor angetrieben. Über einen oder mehrere Antriebsverbinder 4, z.B. einen Antriebsriemen, sind die Förderrollen 3 eines Fördersegmentes 2 untereinander antriebsverbunden und werden durch die motorbetrieben Förderrolle 3M gemeinsam angetrieben.

Anhand eines Präsenzsensor 5 kann die Präsenz eines auf dem Fördersegment angeordneten Förderguts ermittelt werden. Der Präsenzsensor 5 muss dabei nicht das gesamte Fördersegment 2 erfassen; es genügt, wenn die Präsenz eines Förderguts 9 innerhalb eins Teilbereichs des Fördersegments 2 durch Präsenzsensor 5 erkannt wird. Der Präsenzsensor 5 erzeugt dabei ein Sensorsignal S5, welches über eine nicht dargestellte Signalleitung mit einer weiter unten vorgestellten Zonensteuerung 11 verbunden ist. Die Präsenserkennung kann auch ohne einen expliziten Sensor erfolgen und aus anderen Rohdaten abgeleitet werden. So gibt es bereits Ansätze, die Anwesenheit eines Förderguts auf dem Fördersegment aus anderen Daten herzuleiten, z.B. aus dem Verlauf der Stromstärke in einem Fördersegment.

Die Förderrollen 3 sowie der Präsenzsensor 5 eines Fördersegments sind an einem gemeinsamen Stützrahmen 8 befestigt. Die Förderrollen 3 von mehreren Fördersegmenten 2 können an einem gemeinsamen Stützrahmen 8 befestigt sein.

Die Fördersegmente 2 sind in der Förderanordnung 1 entlang einer Förderrichtung F hintereinander angeordnet. Von der Förderanordnung 1 werden die Fördergüter 9a..9c von einem Fördersegment 2a..2d auf das jeweils in Förderrichtung dahinter angeordnete (stromabwärtige) Fördersegment 2b..2e gefördert.

Die motorbetriebenen Förderrollen werden dabei jeweils von einer Zonensteuerung 11 angesteuert. Eine Zonensteuerung 11 kann dabei die motorbetriebenen Förderrollen mehrerer Fördersegmente 2 ansteuern. In der Förderanordnung 1 sind mehrere solcher Zonensteuerungen 11 angeordnet, die untereinander über eine Busverbindung 13 kommunizieren.

Die Zonensteuerungen 11 steuern dabei die motorbetriebenen Förderrollen 3M derart an, dass die nacheinander herangeförderten Fördergüter 9 nicht miteinander kollidieren. Die Ansteuerung erfolgt dabei derart, dass im Wesentlichen nur ein Fördergut 9 pro Fördersegment 2 vorhanden ist. Zu geringfügigen Überlappungen darf es allerdings kommen. So kann ein stromaufwärtiges Fördergut 9b bereits in ein Fördersegment 2d einfahren, obwohl das stromabwärtige Fördergut 9a diese Fördersegment 2d noch nicht vollständig verlassen hat. Als Eingangsgröße dienen dabei unter anderem die Sensorsignale S5 der Präsenzsensoren 5, wobei allerdings sichergestellt wird, dass sich die beiden Fördergüter dann nicht berühren und gegenseitig beschädigen können.

In einer Ausgestaltung sind die die Zonensteuerungen 11 mit einer gemeinsamen übergeordneten Anlagensteuerung 12 verbunden, insbesondere über die Busverbindung 13, mit der auch die Zonensteuerungen 11 untereinander verbunden sind.

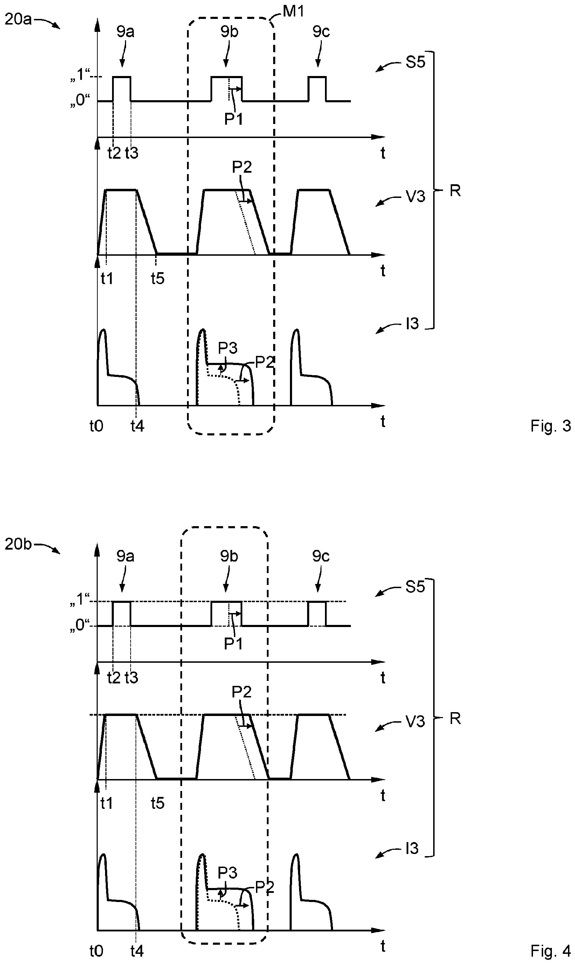

Während des Betriebs eines Fördersegments 2 werden eine Vielzahl an Fördersegmentdaten generiert und erfasst. Ein Datensatz 20a eines ersten Fördersegments 2a ist ausschnittsweise in der Figur 3 dargestellt. Die Fördersegmentdaten sind über die Zeit t aufgetragen.

Zunächst sollen die unterschiedliche Datenarten erläutert werden. Es wird im Rahmen der vorliegenden Beschreibung zwischen folgenden Datenarten unterschieden:
- Rohdaten R,
- abgeleitete Daten A,
- Datenmuster M.

Bei den Rohdaten R handelt es sich um unmittelbar erfassbare Daten, die z.B. von den Sensoren erfasst werden oder durch die Steuerungen an der Busverbindung bereitgestellt werden und.

Bei den abgeleiteten Daten A handelt es sich um Daten, die nicht unmittelbar erfassbar sind, die aber den unmittelbar erfassbaren Rohdaten eines Fördersegments informationstechnisch abgeleitet werden können. So kann beispielsweise aus einer Winkelgeschwindigkeit des Phasenwinkel des Drehstromes eine Fördergeschwindigkeit einer Förderrolle berechnet werden.

Die Rohdaten und die abgeleiteten Daten werden gemeinsam auch als Fördersegmentdaten bezeichnet, da diese eine Eigenschaft oder einen Zustand beschreiben, der momentan in einem Fördersegment auftritt.

Die Datenart "Datenmuster" wird weiter unten näher erläutert.

Die Fördersegmentdaten können folgende Daten umfassen (Figur 3, 4):

### Der Sensorwerts S5 des Präsenszensors 5:

Der Wert t ="1" zeigt an, dass ein Fördergut 9 durch den Präsenszensor 5 erkannt wird (für t2<t<t3). Der Wert "0" zeigt an, dass ein Fördergut 9 durch den Präsenszensor 5 nicht erkannt wird (für t<t2 und t>t3). Der Präsenzsensor 5 deckt dabei das Fördersegment nicht zwangsläufig vollständig ab. Das Fördergut kann folglich eingangsseitig bei t<t2 schon auf dem Fördersegment angeordnet sein, auch wenn dieses noch nicht durch den Sensorwert S5 angezeigt wird. Ebenso kann das Fördergut bei t>t3 ausgangsseitig noch auf dem Fördersegment angeordnet sein, auch wenn Sensorwert S5 bereits t=t3 auf den Wert "0" umschaltet. Die Sensorwerte gehören insbesondere Datenart "Rohdaten" an, da diese unmittelbar vom Sensor bereitgestellt werden.

### Die Geschwindigkeit V3:

Der Wert V3 gibt die Geschwindigkeit einer Rolle im Fördersegment 2 an. Dies betrifft insbesondere die Geschwindigkeit der Motorrolle 3M. Der Wert V3 liegt in der Regel aber nicht zwangsläufig als expliziter Geschwindigkeitswert vor, der beispielsweise durch einen Geschwindigkeitssensor ermittelt wird. So ist die Geschwindigkeit ein Beispiel eines abgeleiteter Datenwerts, der von der Winkelgeschwindigkeit der Phasenwinkel des Drehstromes, mit dem der Drehstrommotor der Motorrolle angetrieben wird, rechnerisch ermittelt wird. Diese Winkelgeschwindigkeit selbst ist wiederum ein Datenwert der Datenart Rohdaten und kann üblicherweise über den Frequenzumrichter des Drehstrommotors abgerufen werden.

### Die Stromstärke 13:

Der Wert I3 gibt die Stromstärke des Stromes an, mit dem die motorbetriebene Förderrolle 3M angetrieben wird. Die Stromstärke I3 steht dabei in direktem Zusammenhang mit der Leistungsaufnahme der motorbetriebenen Förderrolle 3M. Die Stromstärke wird unmittelbar von dem Frequenzumrichter bereitgestellt und fällt somit unter die Datenart Rohdaten.

In einer Ausgestaltung umfasst ein Datensatz 20 weitere oder andere Fördersegmentdaten.

Ein Datensatz 20x ist dabei stets einem spezifischen Fördersegment 2x zugeordnet und umfasst dabei stets Fördersegmentdaten, die während des Betriebs des zugehörigen Fördersegments anfallen, insbesondere generiert werden oder erfasst werden.

Anhand der Figur 3 wird ein üblicher Förderzyklus des Fördersegments 2a dargestellt. In einem solchen Betriebszyklus wird genau ein Fördergut 9 gefördert. Der Förderzyklus wiederholt sich folglich immer wieder dann, wenn ein weiteres Fördergut gefördert werden soll. Zum Zeitpunkt t<t0 ist das Fördersegment im Stillstand und die Förderrollen 3 drehen sich nicht. Von der Zonensteuerung eines stromaufwärtigen Fördersegments (nicht dargestellt) wird die Übergabe des ersten Förderguts 9a angekündigt. Die Zonensteuerung 11 des vorliegenden Fördersegments startet zum Zeitpunkt t=t0 nun die Förderrollen des Fördersegments durch ein entsprechendes Steuersignal. Die Stromstärke I3 schnellt auf einen Maximalwert und beschleunigt die Förderrollen 3, die zum Zeitpunkt t=t1 ihre Arbeitsgeschwindigkeit erreichen.

Zum Zeitpunkt t=t2 wird das Fördergut auf dem Fördersegment durch den Präsenzsensor erkannt.

Aufgrund des Sensorsignals des Präsenzsensors 5 wird zum Zeitpunkt t=t3 erkannt, wann eine hintere Kante des Förderguts 9a den Überwachungsbereich des Präsenzsensors 5 verlassen hat. Anhand der Rollengeschwindigkeit V3 kann nun ermittelt werden, wann das Fördergut 9a das Fördersegment 2a verlassen hat. Dementsprechend kann zum Zeitpunkt t4 nun die Antriebsleistung für die Motorrolle 3M abgeschaltet werden. Die Förderrollen 3 laufen aus und sind zum Zeitpunkt t=t5 im Stillstand.

Der vorgenannte Förderzyklus wiederholt sich dem Grunde nach jedes Mal, wenn ein weiteres z.B. ein zweites und drittes Fördergut 9b, 9c und so weiter auf demselben Fördersegment 2a gefördert wird. Die erfassten Fördersegmentdaten können sich dann dem Grunde nach ähneln. Die oben bezeichneten Zeitpunkte t0..t5 bezeichnen dabei Ereignisse innerhalb eines Förderzyklus, die in jedem Förderzyklus erneut auftreten können. Die Zeitpunkte t0..t5 und die damit bezeichneten Ereignisse treten somit in jedem regulären Förderzyklus erneut auf.

Zur Veranschaulichung sind die Verläufe der Fördersegmentdaten bei der Förderung des zweiten und des dritten Förderguts 9b und 9c aus Figur 2 im Diagramm der Figur 3 eingezeichnet. Abweichungen in dem Verlauf der Fördersegmentdaten können sich insbesondere aufgrund der Beschaffenheit des jeweiligen Förderguts 9 ergeben.

So ist beispielsweise das zweite Fördergut 9b deutlich größer und schwerer als das erste Fördergut 9a ausgebildet (siehe Figur 2). Die erhöhte Größe des zweiten Förderguts 9b bedingt unmittelbar ein längeres Verbleiben des zweiten Förderguts 9b im Überwachungsbereich des Präsenzsensors 5, was in Figur 3 durch den Pfeil P1 bei dem Sensorwert S5 dargestellt ist. Da die Fördersegmentdaten für die Förderung des zweiten Förderguts von denen des ersten und des dritten Förderguts 9a, 9c abweichen, werden diese im Folgenden als erstes Datenmuster M1 bezeichnet.

Entsprechend werden auch die Förderrollen 3 des ersten Fördersegments 2a entsprechend länger betrieben, um das zweite Fördergut 9b vollständig von dem ersten Fördersegment 2a wegzufördern. Dies ist durch die Pfeile P2 bei den Werten für die Motorstromstäke I3 und der Geschwindigkeit V3 dargestellt.

Das erhöhte Gewicht des zweiten Förderguts 9b bedingt zudem eine erhöhte Leistungsaufnahme der motorbetriebenen Förderrolle 3M. Nach dem Beschleunigen der Förderrollen und der Übernahme des Förderguts durch das erste Fördersegment 2a wird daher die motorbetriebene Förderrolle 3M mit einer erhöhten Leistung betrieben. Dies ist in der Figur 3 durch den Pfeil P3 beim Wert für den Motorstrom I3 dargestellt.

In einem Idealzustand werden die Fördersegmentdaten, die im ersten Fördersegment 2a erfasst werden, nun auch im zweiten Fördersegment gleichermaßen erfasst. Figur 4 zeigt analog zur Figur 3 die im zweiten Fördersegment 2b erfassten Fördersegmentdaten. Im Wesentlichen ergibt sich ein gleiches Datenbild, wobei die Fördersegmentdaten einer absoluten Zeitskala natürlich später erfasst werden. Die Zuordnung der Fördersegmentdaten zu dem jeweiligen Fördergut 9a-c bleibt aber gegeben.

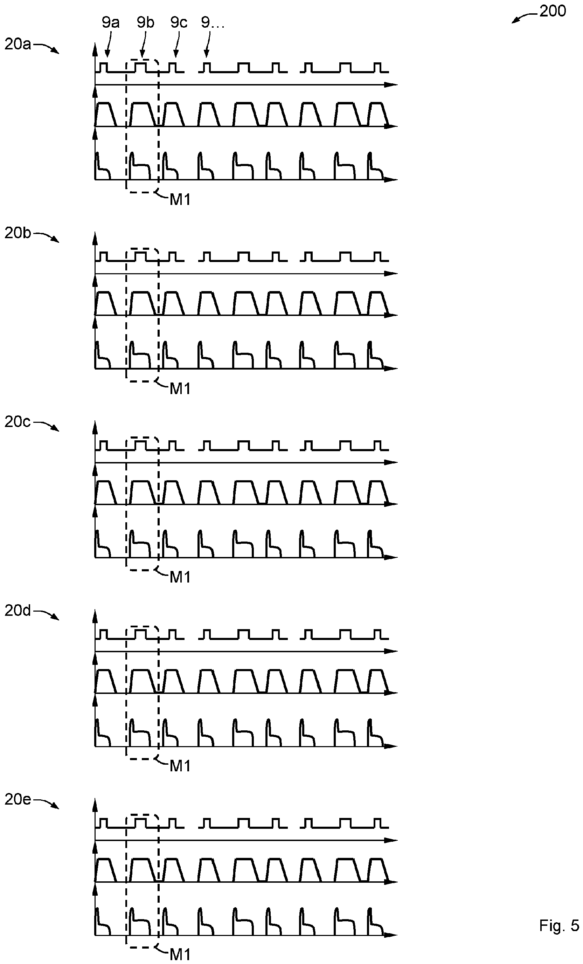

Figur 5 zeigt eine Datensammlung 200, umfassend die Datensätze 20a..20e der Fördersegmente 2a..e, die während der Förderung der Fördergüter 9a..c und weiterer Fördergüter erfasst wurden.

Eine Datensammlung 200 umfasst somit generell die Datensätze 20a...n mehrerer Fördersegmente, insbesondere die Datensätze aller Fördersegmente 2 der Förderanordnung 1.

Zu erkennen ist, dass das spezifische Datenmuster M1, das aufgrund der Förderung des Förderguts 9b im Datensatz 20a des ersten Fördersegment 2a erscheint, nun ebenfalls in den Datensätzen 20b..e aller weiterer Fördersegmente 2b..2e erscheint.

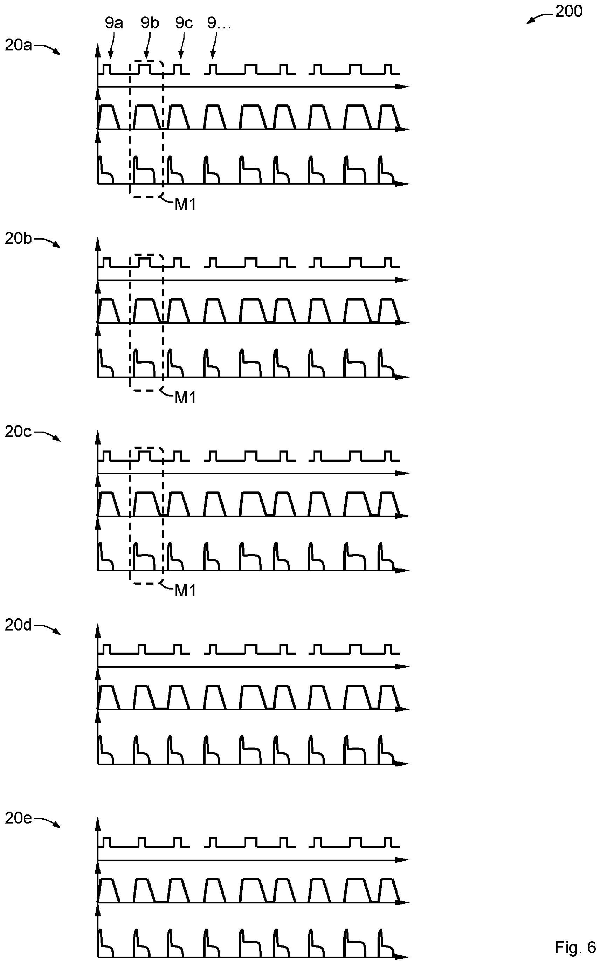

Figur 6 zeigt eine Datensammlung 200, die weitgehend der Datensammlung aus Figur 5 entspricht. Abweichend ist nun, dass das Muster M1 in den Datensätzen 20a..c der ersten drei Fördersegmente 2a..c erscheint, nicht aber in den Datensätzen 20d, 20e der vierten und fünften Fördersegment 2.

Dies ist ein Hinweis auf eine Abnormalität. Die Ursache kann hier vielschichtig sein. Eine mögliche Ursache kann darin liegen, dass es sich bei dem Fördergut, dass in der vierten und fünften Fördersegment erfasst wurde, nicht das zweite Fördergut 9b ist, das in den ersten drei Fördersegmenten erfasst wurde. Beispielsweise kann hier unerlaubter manueller Eingriff in den Fördervorgang stattgefunden haben, bei dem das Fördergut 9 ausgetauscht wurde. Die Abnormalität bezieht sich somit auf das Fördergut (fördergutbezogene Abnormalität).

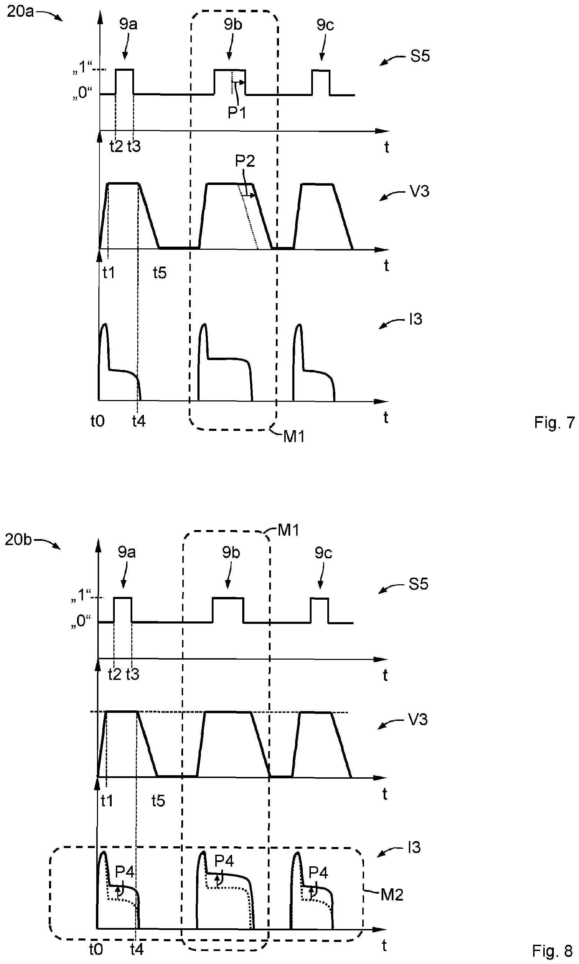

Die Figuren 7 und 8 zeigen analog zu den Figuren 3 und 4 die Datensätze, die bei der Förderung der Fördergüter 9a..c entlang der ersten beiden Fördersegmenten 2a, 2b erfasst werden. Hier wäre zu erwarten, dass sich die Datensätze sehr ähneln, da identische Fördergüter von gleichartiger Hardware gefördert und erfasst werden.

Beispielhaft unterscheiden sich nun die Werte für den Motorstrom I3 im Datensatz 2b des zweiten Fördersegments 2b signifikant von den Werten im ersten Datensatz 20a des ersten Fördersegments 2a. Die Stromstärke I3 ist im zweiten Fördersegment 2b dabei für sämtliche Förderzyklen aller Fördergüter 9a..9c größer in den entsprechenden Förderzyklen des ersten Datensatzes 20a des ersten Fördersegments 2a. Diese Abweichung ist in der Figur 8 durch die Pfeile P4 dargestellt. Die entsprechenden Fördersegmentdaten werden hierbei nachfolgend durch ein zweites Datenmuster M2 charakterisiert.

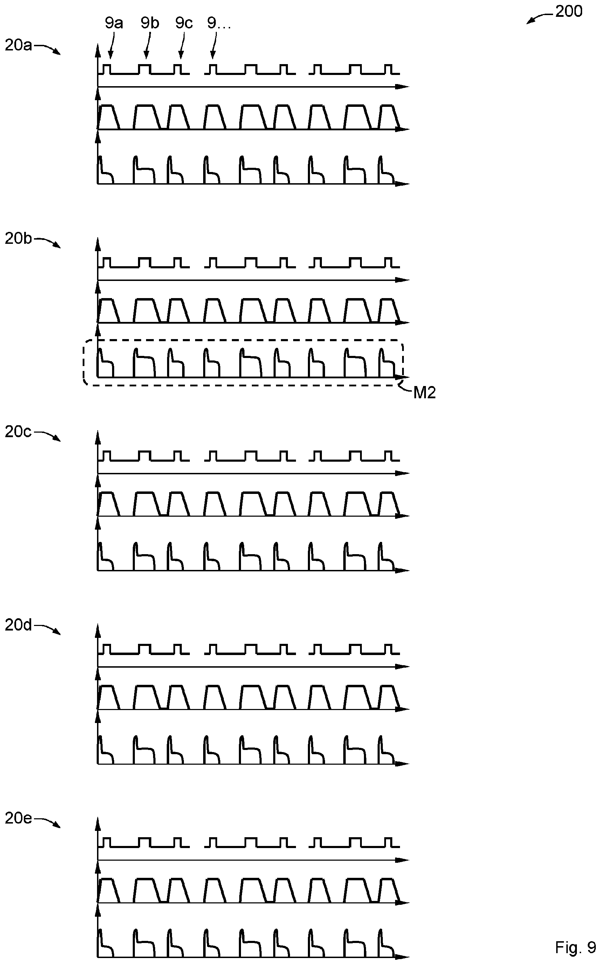

Figur 9 zeigt die Datensammlung 200 analog zu Figur 6. Hier erscheint das zweite Datenmuster M2 nur in dem zweiten Datensatz 20b des zweiten Fördersegments 2b. Da die übrigen Datensätze 20a, 20c..e dieses zweite Datenmuster M2 nicht aufweisen deutet dies auf strukturelle Besonderheiten im zweiten Fördersegment 2b hin. Eine mögliche Ursache könnte ein Defekt an einer der Förderrollen 3 des zweiten Fördersegments 2b sein. So kann beispielsweise ein Gegenstand sich zwischen der Förderrolle 3 und dem Stützrahmen 8 verklemmt haben, was eine bremsenden Wirkung auf die Rollen ausübt. Die motorbetriebene Förderrolle muss folglich mehr Leistung aufbringen. Die Abnormalität bezieht sich somit auf ein einzelnes Fördersegment (fördersegmentbezogene Abnormalität).

Zur Generierung von Datenmustern können gezielt mehrere Fördersegmente zeitlich koordiniert einen Datenmustergenerierungsmodus überführt werden. In diesem Modus vollzieht die Fördersegmente Aktionen, die aus fördertechnischer Sicht keinen Sinn erfüllen. So kann anhand einer kurzfristigen Beschleunigung einer motorbetriebenen Förderrolle ein Antwortverhalten des Förderguts provoziert werden, aus dem sich ein Datenmuster ableiten lässt. Die zeitliche Koordinierung ist insbesondere derart auszuführen, dass die Aktion immer dann ausgeführt wird, wenn ein identisches Fördergut an dem jeweiligen Fördersegment anwesend ist, um so z.B. ein fördergutspezifisches Datenmuster zu generieren. Zur Erzeugung von fördersegmentspezifischen Datenmuster kann die selbe Vorgehensweise sinnvoll sein, da aufgrund des identischen Förderguts über mehrere Fördersegmente identische Bedingungen bei der Generierung der Daten vorhanden sind.

Die Identifizierung der Datenmuster anhand der Fördersegmentdaten erfolgt in einer Ausgestaltung unter Berücksichtigung von gerätespezifischen Metadaten. Die gerätespezifischen Metadaten umfassen dabei statische Parameter der zugrundeliegenden Geräte. So können die motorbetriebenen Förderrollen z.B. unterschiedliche Leistungsstufen aufweisen, so dass sich die motorbetrieben Förderrollen in deren Ansprechverhalten voneinander unterscheiden, auch wenn die Fördersituation ansonsten identisch ist. Die Berücksichtigung kann beispielsweise wie folgt erfolgen:
In einer Möglichkeit werden die unterschiedlichen Geräteparameter rechnerisch kompensiert, wobei die abweichenden Fördersegmentdaten der zueinander abweichenden Geräte eine Vergleichbarkeit erhalten. Dieser Kompensation können die Fördersegmentdaten oder daraus generierte Datenmuster selbst verwendet werden, insbesondere in Form von Kompensationsmustern.

In einer anderen Möglichkeit werden Datenmuster nur anhand von Fördersegmentdaten erzeugt, die auf Basis gleichartiger Hardware generiert wurde.

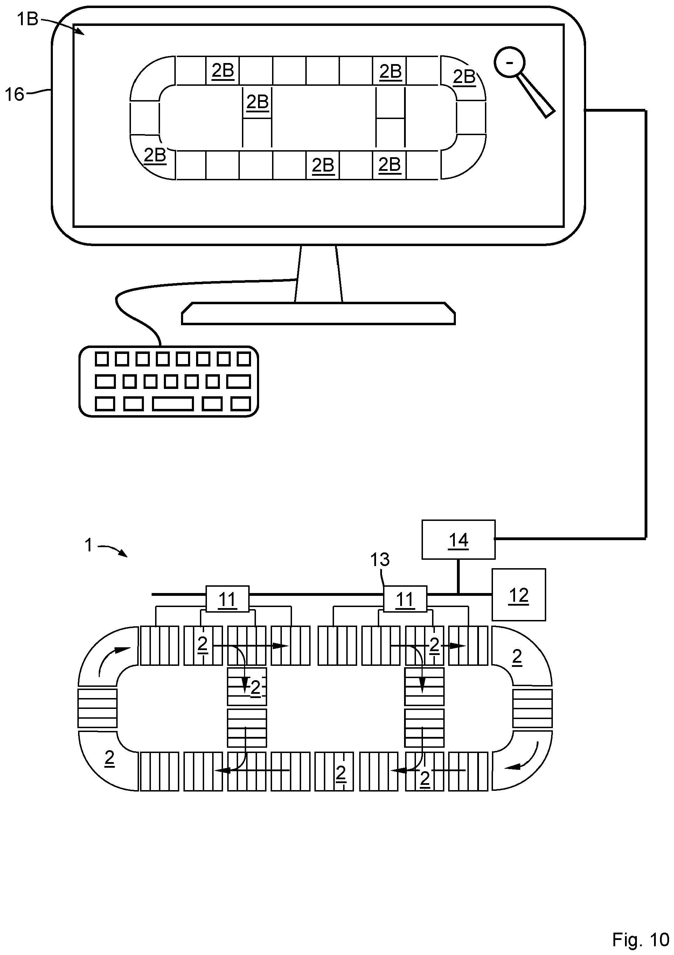

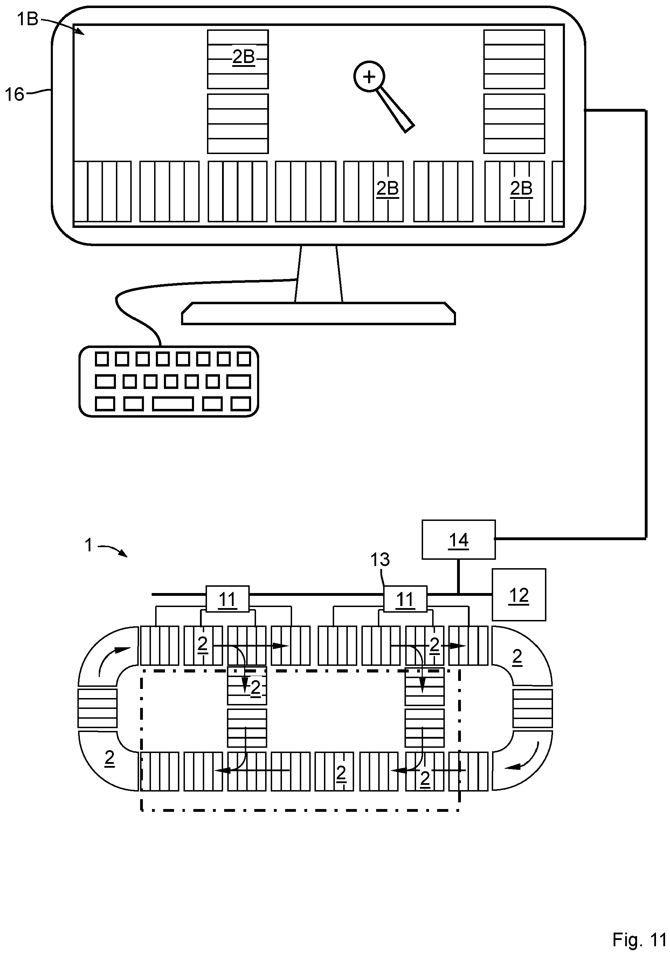

Die Figuren 10 und 11 zeigen eine Weiterbildung der Förderanordnung 1 nach den vorherigen Figuren. Ergänzend sind hierbei weitere Fördersegmente eingezeichnet. So sind zusätzlich zu den geradlinigen Fördersegmenten aus den vorherigen Figuren nun auch andersartige Fördersegmente 2 dargestellt, wie z.B. Transferstellen und Kurven. Die Wege, entlang denen ein Fördergut gefördert wird, sind durch die Pfeile dargestellt. Auf die Art der Fördersegmente kommt es im Rahmen der nachfolgenden Beschreibung aber nicht an. Es stellvertretend für alle Fördersegmente nur vereinzelte Fördersegmente mit dem Bezugszeichen 2 versehen.

Über eine Auswerteeinheit 14 wird die Kommunikation auf der Busverbindung 13 abgehört und ausgewertet. Auswerteergebnisse werden nun auf einer Anzeigevorrichtung 16 in Form eines Bildschirms graphisch wiedergegeben. Hierzu wird an der Anzeigevorrichtung 16 ein Abbild 1B der Förderanordnung 1 dargestellt. Das Abbild 1B der Förderanordnung umfasst dabei Abbilder 2B der Fördersegmente 2 der Förderanordnung 1. Die in der Förderanordnung 1 mit dem Bezugszeichen bezeichneten Fördersegmente sind in dem Abbild 1B jeweils durch Abbilder mit dem Bezugszeichen 2B repräsentiert.

Die Abbilder 2B der Fördersegmente stellen dabei die Fördersegmente 2 vorzugsweise in Draufsicht dar.

Die Abbilder 2B der Fördersegmente 2 sind in dem Abbild 1B so zueinander angeordnet, wie auch die realen Fördersegmente zueinander angeordnet sind. Grenzt in der realen Förderanordnung dabei ein Eingang eines zweiten Fördersegments an den Ausgang eines ersten Fördersegments an, so ist diese Relation auch in dem Abbild 1B gegeben.

Das Abbild 1B kann anhand eines Planungswerkzeug erstellt werden. Ein solches Planungswerkzeug ist beispielsweise eine Softwareanwendung, mit der aus den Datenmodellen von Einzelkomponenten eine Förderanordnung zusammengestellt werden kann, ähnlich bei der Konfiguration eines Neuwagens auf der Homepage des Herstellers. Aus einem bei der initialen Planung der Förderanordnung erzeugten Datenmodell kann das hier angewendete Abbild 1B erzeugt werden.

Hier kann sich ein Betriebsleiter (stellvertretend für jede andere Person, die sich für den Zustand der Förderanordnung interessiert) über die Funktion und den Zustand der Förderanordnung 1 informieren. Die Rohdaten werden dabei aufbereitet angezeigt, so dass der Betriebsleiter sich über visuelle Eindrücke mit wesentlichen Information aus der Förderanordnung versorgen kann.

Zunächst kann der Betriebsleiter anhand einer Zoomfunktion die Darstellung auf einen bestimmten Maßstab einstellen. Figur 10 zeigt in der Anzeigevorrichtung 14 ein Abbild 1B der Förderanordnung in einem kleineren Maßstab; Figur 11 zeigt in der Anzeigevorrichtung 14 ein Abbild 1B der Förderanordnung in einem größerem Maßstab.

Ein Detaillierungsgrad des Abbildes variiert dabei in Abhängigkeit des Maßstabs. So können mit einem größerem Maßstab pro Fördersegment mehr Details dargestellt werden als bei einem kleineren Maßstab.

Um dem Betriebsleiter auf intuitive Weise Informationen über den Zustand der Förderanlage zu vermitteln können die Rohdaten graphisch aufbereitet werden. So können die einzelnen Fördersegmente entsprechend der Rohdaten eingefärbt werden.

In den nachfolgenden Figuren werden dafür Beispiele aufgeführt, wobei die Einfärbungen entsprechend textlich illustriert sind, da in Patentzeichnungen keine Farben verwendet werden können.

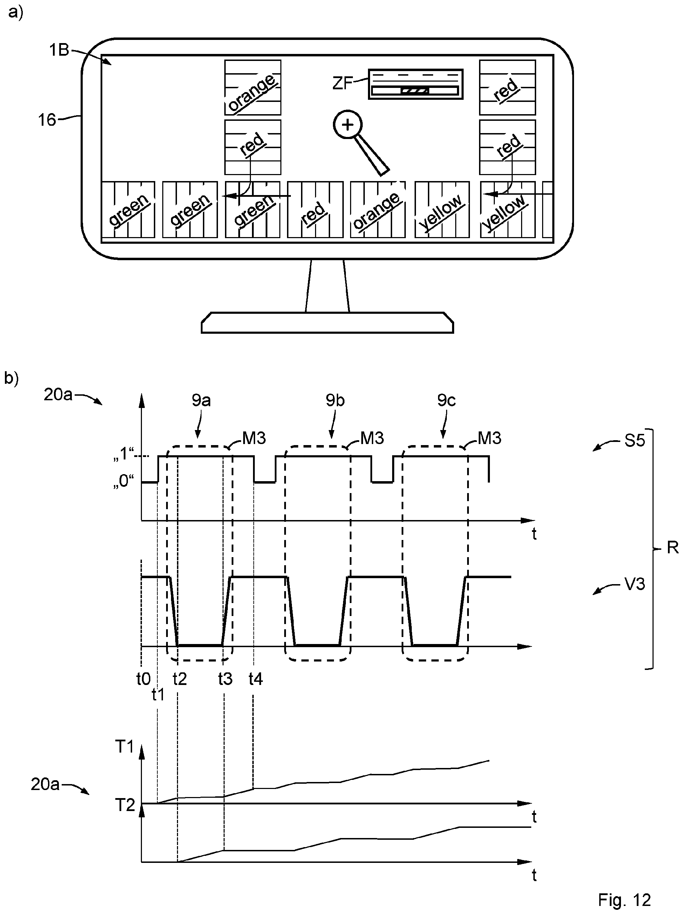

Figur 12a visualisiert einen Zustand, welcher häufig in einer Förderanordnung auftritt. Durch die zusammenführenden Pfeile wird eine Transferstelle visualisiert, an der zwei Förderpfade aufeinandertreffen und zusammengeführt werden. Hier kann es vermehrt zu Staubildungen kommen, wenn mehr Fördergüter an die Transferstelle herangeführt werden als abgeführt werden.

Die Farbcodierung gibt dabei eine Hinweis auf eine Stausituation an, ähnlich der Darstellung des Staugeschehens auf einer digitalen Straßenkarte. Ein solcher Stau an Fördergütern lässt sich durch die Rohdaten R isoliert nicht unmittelbar ablesen. Vielmehr bedarf es einer Auswertung der Rohdaten durch die Auswerteeinheit, insbesondere unter Verwendung einer Mustererkennung.

Ein Stau an Fördergütern kann insbesondere durch ein spezielles Muster der Rohdaten umfassend das Signal S5 des Präsenzsensors 5 und der Geschwindigkeit V3 einer Förderrolle 3 erkannt werden, was in Figur 12b illustriert ist. Zum Zeitpunkt t0 dreht sich die Förderrolle (V3>0) und ein erstes Fördergut 9a wird von einer vorhergehenden Fördersegment herangefördert S5= "1"). Zum Zeitpunkt t1 wird das erste Fördergut 9a vom Präsenzsensor 5 erkannt. Zum Zeitpunkt t2 ist die Fördergeschwindigkeit V3 gleich Null, obwohl das erste Fördergut a noch auf dem Fördersegment vorhanden ist und weitergefördert werden möchte. Dies kann als klarer Hinweis auf eine Stausituation gedeutet werden, da das Fördergut nun nicht an das stromabwärtige Fördersegment gefördert wird. Erst nach Ablauf einer Wartezeit zum Zeitpunkt t3 läuft das Fördersegment wieder an und das erste Fördergut 9a verlässt zum Zeitpunkt t4 den Erkennungsbereich des Präsenzsensors 5. Das entsprechende Datenmuster M3 wiederholt sich auch für die nachfolgenden Fördergüter 9b, 9c. Das dritte Datenmuster M3 wird daher im Verfahrensschritt "Spezifizieren" als fördersegmentspezifisches Datenmuster spezifiziert.

Die Einfärbung kann dabei anhand der folgenden Algorithmen erfolgen. Wie zuvor erläutert ist es für das dritte Datenmuster M3 charakteristisch, dass trotz erkanntem Fördergut auf dem Fördersegment die Fördergeschwindigkeit während eines signifikanten Zeitraums Null beträgt.

Eine erste Dauer T1 ist dabei die Summe aus den Zeiträumen, in denen ein Fördergut im Erkennungsbereich des Präsenssensors 5 ist und die Fördergeschwindigkeit V3 ungleich 0 ist. Die erste Dauer T1 setzt sich im vorliegenden Beispiel aus den Zeiträumen t1< t < t2 sowie t3<t<t4 zusammen, aufsummiert über mehrere Förderphasen von mehreren Fördergütern 9a..c.

Eine zweite Dauer T2 ist dabei die Summe aus den Zeiträumen, in denen ein Fördergut im Erkennungsbereich des Präsenssensors ist, aber die Fördergeschwindigkeit V3 gleich 0 ist. Folglich ist ein Fördergut vorhanden, welches gefördert werden soll, es wird aber nicht gefördert. Die zweite Dauer T2 setzt sich aus den Zeiträumen t2< t < t3 zusammen, aufsummiert über mehrere Förderphasen von mehreren Fördergütern 9a..c.

Je größer nun der Anteil der zweiten Dauer T2 gegenüber der ersten Dauer T1 ist, desto niedriger ist die effektive Förderleistung an Fördergütern, die gefördert werden sollen. Der Quotient Q aus T2/T1 stellt damit ein Maß für das Stauaufkommen an dem Fördersegment dar. Dieser Quotient Q wird nun als Stauwert bezeichnet. Jedem Fördersegment kann nun ein fördersegmentspezifischer Stauwert Q zugeordnet werden.

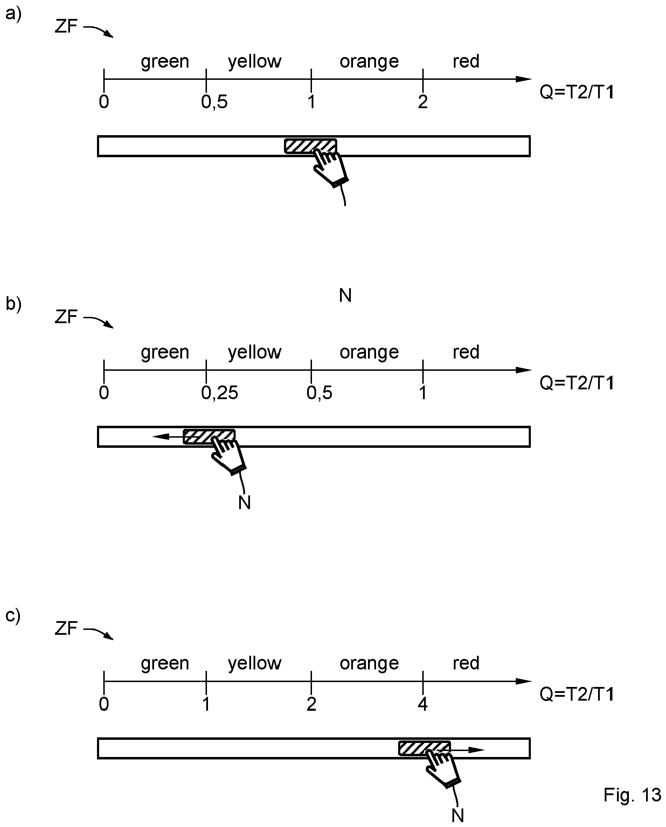

Anhand einer hinterlegten Farbzuordnung ZF (Figur 13) kann dem Stauwert Q eine Farbe zugeordnet werden, mit der das Abbild 2B des entsprechenden Fördersegments gemäß Figur 12 versehen wird, z.B. mit der Maßgabe: "Je größer der Stauwert desto roter!"

Die Farbzuordnung F liefert dabei jedem Stauwert Q eine entsprechende Farbe. Nach der Zuordnung nach Figur 13a wird beispielsweise das Fördersegment mit der Farbe rot eingefärbt, wenn der Stauwert größer als 2 ist. Nach der Zuordnung nach Figur 13a wird beispielsweise das Fördersegment mit der Farbe grün eingefärbt, wenn der Stauwert Q kleiner als 0,5.

Die Farbzuordnung gilt dann für alle dargestellten Fördersegmente, so dass anhand der Farbzuordnung etwaige Stau-Hotspots leicht identifiziert werden können.

Der Nutzer hat nun die Möglichkeit, die Farbzuordnung anzupassen. So kann er anhand einer Nutzereingabe N die Farbzuordnung ZF anpassen. Die Nutzereingabe ist als Schieberegler beispielhaft illustriert, anhand dem die Grenzwerte zwischen den einzelnen Farben verschoben werden können. Die Figuren 13 b und 13c zeigen dann Farbzuordnungen, die aufgrund einer Nutzereingabe geändert wurden. Die Einfärbungen der Fördersegmente können sich unmittelbar mit der Nutzereingabe ändern, so dass der Nutzer einen geeigneten Farbkontrast leicht einstellen kann. Der allgemeinere Begriff Festlegen umfasst dabei ein initiales Festlegen der Farbzuordnung sowie das spätere Ändern der Farbzuordnung.

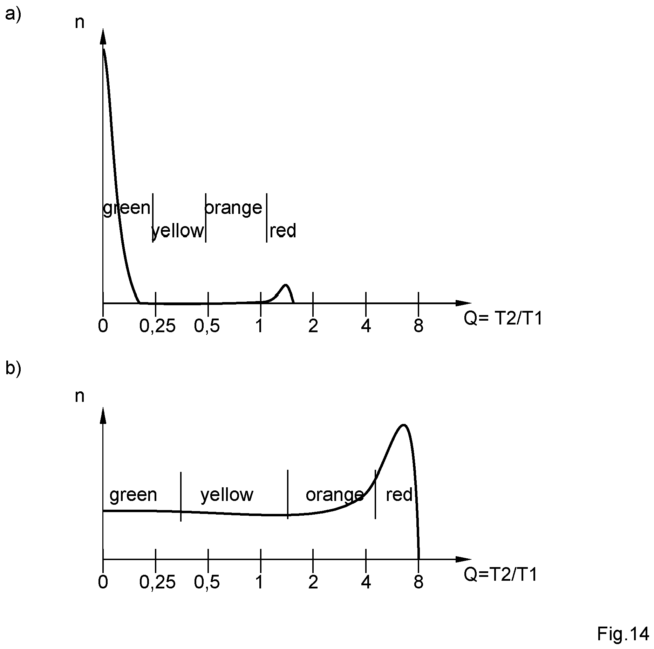

Anhand der Figur 14a wird beispielhaft illustriert, wie eine Farbzuordnung ZF automatisiert verändert werden kann. Der Wert n bezeichnet hierbei eine Anzahl von Fördersegmenten, für denen ein gewisser Stauwert zugeordnet ist. Zu erkennen ist, dass die meisten Fördersegmente einen Stauwert Q < 0,25 aufweisen und. Lediglich ein geringe Anzahl weist einen Stauwert von Q ~ 1,5 auf. Stauwerte Q > 2 treten nicht auf.

Hierbei wird die Farbzuordnung nun so gewählt, dass die Maximalwerte automatisch in den roten Bereich fallen und damit visuell hervorgehoben werden.

Im Falle der Figur 14b herrscht im Bereich zwischen 0 und 4 eine Gleichverteilung. Im Bereich über 4 steigt die die Anzahl stark an. Auch werden die maximalen Stauwerte von Q=8 in den roten Bereich gesetzt. Um nun einen farblichen Kontrast zu generieren werden die Grenzen mit den weiteren Farben gelb und orange gleichmäßig im Gesamtbereich der auftretenden Stauwerte verteilt.

Die logarithmische Darstellung und die damit verbundene Verteilung ist hier nur beispielhaft; gleichsam ist eine lineare Darstellung mit entsprechender Verteilung möglich.

In einer Ausgestaltung wird die Farbzuordnung initial auf Basis der zugrunde liegenden Daten automatisch festgelegt. Anschließend wird dem Nutzer die Gelegenheit gegeben, die Farbzuordnung anhand einer Nutzereingabe zu verändern.

Ein weiterer Anwendungsfall der farblichen Einfärbung ist die Anzeige der Betriebsdauer einzelner Komponenten. Insbesondere Förderrollen weisen eine Nominallebensdauer auf. So kann aus den Rohdaten die Gesamtlaufzeit einer motorbetriebenen Förderrolle abgeleitet werden. Basierend auf der abgeleiteten Gesamtlaufzeit kann dann die Färbung eingestellt werden.

Auf diese Weise kann sich der Nutzer ein Bild von der Verteilung der Laufzeiten in der Förderanordnung machen und ggf. einzelne Förderrollen vorzeitig ersetzen. Alternativ lassen sich die Förderrolle einfach austauschen. So kann eine im Abbild grün eingefärbte Förderrolle mit einer im Abbild rot eingefärbten Förderrolle die Positionen tauschen. Eine bislang hoch beanspruchte Förderrolle wird so in eine Position in Förderanordnung eingesetzt, die eine geringer Auslastung der Förderrolle bedingt. Die gesamte Förderanordnung kann so effizienter genutzt werden und die Wahrscheinlichkeit für Verschleißausfälle reduziert werden.

Ein weiterer Anwendungsfall der farblichen Einfärbung ist die Darstellung von elektrischen Leistungsdaten. So können in einem Fördersegment die Summe der anfallenden elektrischen Leistung angezeigt werden (die aktuelle Leistung oder die durchschnittliche Leistung über einen gewissen Zeitraum). Etwaige Risiken von Überlastungen von Netzteilen, die die Versorgung mit elektrischer Energie sicherstellen, kann so visuell dargestellt werden.

Die enormen anfallenden Datenmengen erfordern eine definierte Verwaltung. Insbesondere sind Daten nach einer vordefinierten Weise zu löschen. So werden fördergutspezifische Datenmuster intern aus der internen Auswerteeinheit 14 der betreffenden Förderanordnung zumindest nach einer vordefinierten Zeit gelöscht, nachdem das Fördergut die Förderanordnung verlässt. Fördersegmentspezifische Muster werden nach einer vordefinierten Zeit aus der internen Auswerteeinheit 14 der betreffenden Förderanordnung gelöscht, nachdem die Ursache für das fördersegmentspezifische Muster behoben wurde, beispielsweise nachdem eine defekte motorbetriebene Förderrolle ausgetauscht wurde.

Die Löschung wir dabei auf unterschiedlichen Ebene gehandhabt: Selbst nachdem die Ursachen (spezielles Fördergut, defekte Hardware) der Datenmuster nicht mehr in den entsprechenden Förderanordnungen vorhanden sind, können die Datenmuster für eine weitere Verwendung der zentralen Auswerteeinheit zur Verfügung stehen, insbesondere in einer zentralen Datenbasis.

Als Datenformat für die zur Speicherung und Weitergabe von Daten des Abbildes wird GeoJSON verwendet. Auf die einschlägige Literatur zu diesem Format hierzu wird verwiesen (z.B. https://en.wikipedia.org/wiki/GeoJSON). GeoJSON ist ein Standard Datenformat, welches für die Speicherung und anschließender Weiterverwendung einfacher Objekte geeignet ist, denen eine bestimmte Position auf der Erdkugel zugeordnet ist. Jedes Objekt wird dabei durch einen oder mehreren Punkte repräsentiert, deren Positionen durch geodätische Koordinaten (z.B. im Referenzsystem WGS 84) angegeben ist. Jedes Objekt kann mit weiteren Eigenschaften versehen werden.

Im Rahmen der intralogistischen Fördertechnik hat die genaue geographische Position einzelner Komponenten nur eine untergeordnete Bedeutung. Im Rahmen der vorliegenden Erfindung wird nun aber ausgenutzt, dass anhand der Koordinatenangaben, die das GeoJSON Datenformat bereitstellt, bereits die relative Position einzelner Fördersegmente bzw. deren Abbilder innerhalb der Fördertechnik gespeichert werden kann.

Die verwendeten Positionsangaben der Daten im GeoJSON Format müssen also nicht die absolute Position in einem globalen referenzsystem (z.B. WGS84) darstellen; vielmehr kann von einem frei gewählten Bezugssystem ausgegangen werden, dessen Nullpunkt beispielsweise in der Werkshalle liegt, in der auch die reale Förderanordnung angeordnet ist.

Der Vorteil der Verwendung von GeoJSON liegt insbesondere in der einfachen Verarbeitungsmöglichkeit durch eine Vielzahl von verfügbaren Anwendungen / Plug-Ins zum Anzeigen der Objekte. Nach entsprechender Datentransformation können die Daten der Abbilder mitsamt weiteren Eigenschaften einer Vielzahl von Nutzern nach Belieben zur Verfügung gestellt werden, wobei die Nutzer die Daten anhand von Standardanwendungen visualisieren können. In einer Ausgestaltung könnten so die Daten auch in google maps importiert werden, wobei Google maps dann lediglich als Visualisierungstool dient.

Ein Abbild eines Fördersegmentes umfasst dabei eine vereinfachte Darstellung des Fördersegmentes in Draufsicht. Dieses Darstellung wird als Polygon in einem Datenobjekt unter Verwendung des Datenformats GeoJSON abgespeichert. Auch Kurvensegmente werden dabei als Polygone abgespeichert, da gekrümmte Linien durch mehrere geradlinige Verbindungslinien zwischen zwei Punkten definiert werden.

### Bezugszeichenliste

- 1: Förderanordnung
- 1B: Abbild der Förderanordnung
- 2a...e: Fördersegment
- 3: Förderrolle
- 3M: Motorrolle
- 4: Verbinder
- 5: Präsenzsensor
- 8: Stützrahmen
- 9die: Fördergut
- 100: Fördernetzwerk

- 11: Zonensteuerung
- 12: Anlagensteuerung
- 13: Busverbindung
- 14: lokale / interne Auswerteeinheit
- 15: lokales Gateway
- 16: Anzeigevorrichtung
- 17: Fördergutdatenbank
- 17S: Fördergutdatensatz
- 18: Datenfernverbindung
- 19: zentrale Auswerteeinheit

- 20a... e: Datensatz eines Fördersegments
- 200: Datensammlung von Datensätzen mehrerer Fördersegmente
- F: Förderrichtung

- R: Rohdaten:
S5 Signal eines Präsenzsensors
I3 Motorstrom der motorbetriebene Förderrolle
C Steuersignale

### Abgeleitete Daten:

- V3: Geschwindigkeit der motorbetriebenen Förderrolle
- L: Länge eines Förderguts
- M: Datenmuster
- M1, M2: erstes, zweites, .. Datenmuster
- T1, T2: erste, zweite Dauer
- L: lokaler Bereich
- ZF: Farbzuordnung

## Patentansprüche

1. Verfahren zum Anzeigen eines Abbildes (1B) einer Förderanordnung (1) und/oder Abbildern (2B) von mehreren Fördersegmenten (2) der Förderanordnung (1) graphisch auf einer Anzeigevorrichtung (16),
die räumliche Anordnung der Abbilder (2B) zueinander entspricht einer räumlichen Anordnung der durch die Abbilder (2B) dargestellten Fördersegmente (2) zueinander,
insbesondere wobei das Abbild (2B) eine graphische Darstellung der Fördersegmente in Draufsicht umfasst.

2. Verfahren nach einem der vorherigen Ansprüche,
**dadurch gekennzeichnet,**
**dass** basierend auf den erfassten Fördersegmentdaten (R, A), insbesondere auf Basis eines fördersegmentspezifischen Datenmusters (M3), eines der Abbilder oder mehrere der Abbilder mit einer datenabhängigen Färbung versehen werden, insbesondere wobei die Färbung auf Basis einer, insbesondere hinterlegten, Farbzuordnung (ZF) erfolgt, wobei die Farbzuordnung einer Kenngröße (Q), die auf Fördersegmentdaten (R, A) basiert, eine Färbung zuordnet,
insbesondere wobei die Farbzuordnung variabel ist.

3. Verfahren nach dem vorherigen Anspruch,
**dadurch gekennzeichnet,**
- **dass** die variable Farbzuordnung (ZF) anhand einer Nutzereingabe (N) festgelegt wird; und/oder
- **dass** die variable Farbzuordnung (ZF) automatisiert festgelegt wird;
insbesondere dass die Farbzuordnung (ZF) initial automatisiert festgelegt wird und anschließend dem Nutzer eine Möglichkeit zur Veränderung der Farbzuordnung anhand einer Nutzereingabe (N) gegeben wird.

4. Verfahren nach einem der vorherigen Ansprüche,
die Förderanordnung (1) umfasst eine Mehrzahl an Fördersegmenten (2a..e), jedes Fördersegment (2) ist eingerichtet zur Förderung eines Förderguts (9) entlang einer Förderrichtung (F);
die Fördersegmente (2) sind derart nacheinander angeordnet, damit das Fördergut (9) von einem stromaufwärtigen Fördersegment (2a..2d) an ein stromabwärtiges Fördersegment (2b..e) übergeben wird,
jedes Fördersegment (2) weist einen Fördersegmentantrieb (3M) auf, der eingerichtet ist, eine Antriebskraft, insbesondere isoliert für dieses Fördersegment, bereitzustellen, um so das Fördergut (9) auf diesem Fördersegment zu fördern; insbesondere weist jedes Fördersegment (2) eine Präsenzerkennung, insbesondere einen Präsenzsensor (5), eingerichtet zur Erkennung der Anwesenheit eines Förderguts (9) auf dem Fördersegment (2) auf,
jedem Fördersegment (2) ist eine Zonensteuerung (11) zur Steuerung des Fördersegmentantriebs (3M) zugeordnet;
insbesondere ist eine übergeordnete Anlagensteuerung (12) vorgesehen, um die Mehrzahl der Fördersegmente (2) anzusteuern und/oder die Mehrzahl an Zonensteuerung (11) anzusteuern;
das Verfahren umfasst die folgenden Verfahrensschritte:
**Erfassen** von Fördersegmentdaten (R, A), die beim Betrieb eines Fördersegments (2) anfallen, und
**Anzeigen** von Fördersegmentdaten (R, A) mitsamt dem Abbild (2B) des zugehörigen Fördersegments (2).

5. Verfahren nach dem vorherigen Anspruch,
**dadurch gekennzeichnet,**
**dass** die Fördersegmentdaten Rohdaten (R) sowie abgeleitete Daten (A) umfassen; wobei die Rohdaten (R) solche Daten umfassen, die anhand eines im Fördersegment (2) angeordneten Sensors (5) erfasst werden (I3, S5) oder als Steuerdaten (C) zur der Ansteuerung des Fördersegments von einer Steuerung (11, 12) erzeugt werden;
wobei die abgeleiteten Daten (A) rechnerisch isoliert aus Rohdaten (R) eines einzelnen Fördersegmentes erzeugt werden.

6. Verfahren nach einem der vorherigen Ansprüche,
wobei die Fördersegmentdaten (R, A, 5S, V3, I3, C), die beim Betrieb von einer Vielzahl von Fördersegmenten (2a..e) anfallen, in einer Datensammlung (200) zusammengefasst werden;
insbesondere wobei die Fördersegmentdaten (R, A, 5S, V3, I3, C), die beim Betrieb eines Fördersegmentes anfallen, in einem Datensatz (20) zusammengefasst werden und/oder dass die Datensätze (20..e) einer Vielzahl von Fördersegmenten (2a..e) in der Datensammlung (200) zusammengefasst werden.

7. Verfahren nach einem der vorherigen Ansprüche,
**dadurch gekennzeichnet,**
**dass** die Abbilder unter Verwendung des Datenformats GeoJSON gespeichert werden.

8. Verfahren nach dem vorherigen Anspruch,
**dadurch gekennzeichnet,**
**dass** die räumliche Gestalt des Fördersegments (2) und/oder der Förderanordnung (1), insbesondere datenreduziert, durch ein Polygon im Datenformat GeoJSON abgespeichert wird.

9. Verfahren nach dem vorherigen Anspruch,
**dadurch gekennzeichnet,**
**dass** das Poylgon eine Kontur des Fördersegments (2) und/oder der Förderanordnung (1) in Draufsicht repräsentiert.
